# EUROPÄISCHE PATENTANMELDUNG

(11) **EP 1 860 075 A1**
(43) Veröffentlichungstag der Anmeldung: **28.11.2007**
(21) Anmeldenummer: 07010107.6
(22) Anmeldetag: 22.05.2007
(51) Int. Cl.: C03B 33/09, C03B 33/023

(54) **Verfahren und Vorrichtung zum Randbeschneiden eines Floatglasbandes**

(30) Priorität: 23.05.2006 DE 102006024825
(71) Anmelder: JENOPTIK Automatisierungstechnik GmbH, 07745 Jena (DE)
(72) Erfinder: Acker, Stefan, 07646 Waldeck (DE); Weisser, Jürgen, 07743 Jena (DE); Eberhardt, Gabriele, 07749 Jena (DE); Ullmann, Ronny, 07768 Kahla (DE); Kondratenko, Vladimir Stepanovich, Prof. Dr., Moskau 111402 (RU)
(74) Vertreter: Schaller, Renate

(57) **Zusammenfassung**

Verfahren und Vorrichtung zum Randbeschnitt eines Floatglasbandes (13) dessen Dicke zwischen 0,4 und 24 mm veränderbar ist, bei dem für die jeweilige Dicke ein spezifischer Tiefenriss erzeugt wird, dessen Tiefe aktiv beeinflusst wird durch den Energieeintrag mittels Laser, gesteuert in Abhängigkeit von der Oberflächentemperatur des Floatglasbandes (13) und einer nachfolgenden Kühlung deren zeitliche Einwirkung veränderbar ist.

Zur Gewährleistung einer permanenten Prozesssicherheit wird der Trennriss und die Dicke des Floatglasbandes (13) detektiert, um bei Abbruch des Trennrisses umgehend einen neuen Initialriss zu setzen bzw. um eine die Ritzeinrichtung (10), die Strahlformungsoptik (2) und die Kühldüsen (4) umfassende Schneideinheit (11) stets in einem konstanten Höhenabstand von der Oberfläche des Floatglasbandes (13) zu positionieren.

Verfahren und Vorrichtung zeichnen sich insbesondere durch den Bedarf einer nur geringen Laserleistung aus.

## Beschreibung

Die US 5,609,284 gehört zu den ersten Patenten, in denen betreffs eines Verfahrens zum Trennen von sprödem Flachmaterial, insbesondere Glas, mittels Erzeugung von thermisch induzierten Spannungen, die zu einem Riss bis in eine spezifische Tiefe führen, konkrete Überlegungen zur Korrelation der Prozessparameter veröffentlicht wurden.

Vorzugsweise wird bei dem hier beschriebenen Verfahren ein CO₂-Laser (Wellenlänge 10,6 µm) verwendet, der von Glas gut absorbiert wird. Als Parameter, die einen Einfluss auf die für die Qualität der Trennkante entscheidende Risstiefe δ haben, werden die geometrische Größe des auf der Oberfläche erzeugten elliptischen Strahlflecks, bestimmt durch die Längen der Nebenachse (Breite) a und der Hauptachse (Länge) b, der Abstand L zwischen Laserstrahl und nachfolgendem Kühlmittelstrahl, die Vorschubgeschwindigkeit v sowie ein Proportionalitätsfaktor k, der von den thermophysikalischen Eigenschaften des Materials und der Strahlungsleistungsdichte abhängt, genannt.
Nach der Formel v = k·a·(b + L) / δ sollen die Strahlparameter a, b in Bezug auf den Abstand L und die Vorschubgeschwindigkeit v so ausgewählt werden, das ein Blindriss mit einer geforderten Risstiefe δ entsteht.

In der Beschreibung des Standes der Technik der WO 2005/092806 wird zur US 5,609,284 festgestellt, dass mit dem dort beschriebenen Verfahren nur Glasdicken zwischen 1,2 mm und 6 mm bei einer maximal erreichbaren Schnittgeschwindigkeit von 1 m/min geschnitten werden können. Tatsächlich sind nur diese Werte durch die Ausführungsbeispiele gestützt.

Die Anmelderin der WO 2005/092806 schließt daraus, dass ein Verfahren gemäß der US 5,609,284 nicht geeignet ist, um Floatgläser unmittelbar an der Floatglasanlage zu beschneiden.

Um die besonderen technologischen Anforderungen beim Schneiden von Floatglas (Randbeschnitt) aufzuzeigen, soll nachfolgend der Prozess der Floatglasherstellung (Floatprozess) kurz beschrieben werden. Der Floatprozess ist ein endloskontinuierlicher Prozess, der in der Regel mehr als 10 Jahre ununterbrochen läuft, bis eine Reparatur der Floatwanne erforderlich wird.
Die bei 1100°C teigig-flüssige Glasschmelze wird fortlaufend von einer Seite in ein längliches Bad aus flüssigem Zinn geleitet, auf welchem das etwa 2/3 leichtere Glas schwimmt und sich ähnlich einem Ölfilm gleichmäßig ausbreitet. Das am kühleren Ende des Bades erstarrte noch ca. 600°C warme Glas wird fortlaufend herausgezogen und durchläuft anschließend einen Kühlofen, in welchem es heruntergekühlt wird.
Die Ziehgeschwindigkeit mit der das feste Glas von der halbflüssigen Phase abgezogen wird, sowie die Tonnage des Schmelzofens, bestimmen die Dicke des Glases. D.h. um eine bestimmte Glasdicke zu ziehen, muss, das Glas mit einer bestimmten Geschwindigkeit abgezogen werden, die sich im wesentlichen aus der Zeitdauer des Abkühlprozesses bestimmt. Die seitlichen Ränder des Glases, die sich zu den Kanten hin verjüngen, werden zur Konfektionierung des Glasbandes auf eine einheitliche Breite konstanter Dicke noch in der Floatglasanlage hinter dem Kühlofen abgeschnitten (Randbeschnitt), wobei hier unter einem Schneiden das Erzeugen eines Risses und anschließendes Brechen entlang des Risses verstanden werden soll. Die Dicke des zu schneidenden Floatglasbandes kann über dessen Länge gezielt verändert werden. Das Floatverfahren ermöglicht Glasstärken ab etwa 0,4 mm. Üblicherweise werden die weltweiten Standardstärken (Dicke) 2, 3, 4, 5, 6, 8, 10, 12, 15, 19 und 24 mm produziert. Die Ziehgeschwindigkeit variiert abhängig von der Dicke zwischen 30 m/min und 2 m/min.

An ein Verfahren und eine Vorrichtung zum Beschneiden eines Floatglasbandes bedingt durch die Prozessgegebenheiten beim Floatverfahren werden folgende Anforderungen gestellt:
1. Das Verfahren muss geeignet sein, für Gläser im Dickenbereich von 0,4 mm bis 24 mm einen spezifischen Tiefenriss zu erzeugen.,
2. Es müssen Schnittgeschwindigkeiten gleich der vorgegebenen Ziehgeschwindigkeiten möglich sein.
3. Es muss abgesichert werden, dass die Rissbildung kontinuierlich erfolgt, da auch der Ziehprozess kontinuierlich erfolgt.
4. Es muss abgesichert werden, dass die von der Dicke abhängige spezifische Risstiefe kontinuierlich erreicht wird, auch in den Übergangszeiten während der Umstellung auf unterschiedliche Materialdicken und bei Temperaturveränderungen, damit der Durchbruch entlang des Risses für gleiche Materialdicken immer mit einer unveränderten Bruchkraft vollzogen werden kann.

Es ist entscheidend für die Erzeugung eines Trennrisses, dass eine scharf lokalisierte Zugspannung entlang der gewünschten Trennlinie auf der Materialoberfläche erzeugt wird, welche die kritische Bruchspannung überschreitet. Die Risstiefe hängt davon ab, bis in welche Tiefe in das Material hinein Zugspannungen eingebracht werden, die über der kritischen Bruchspannung liegen. Um eine qualitativ hochwertige Trennkante zu erzielen, muss der Riss eine von der Dicke abhängige Mindesttiefe haben, die ungefähr bei einem Zehntel der Dicke liegt.

Um die erforderliche scharf lokalisierte Zugspannung größer der kritischen Bruchspannung zu erzeugen, muss ein entsprechend scharf lokalisierter ausreichend hoher Temperaturgradient gebildet werden.

Der Temperaturgradient wird durch Erwärmung und anschließende Kühlung erreicht. Dabei kann die Erwärmung wie bereits aus der US 5,609,284 bekannt, nicht nur durch die Einwirkung eines Lasers, sondern vorteilhaft auch durch eine Kombination aus einer globalen Vorwärmung des Materials und einer lokalen Beaufschlagung mittels Laser erzeugt werden. Die Vorwärmung erfordert jedoch einen zusätzlichen Energieaufwand, da das gesamte Material vorgewärmt werden muss, obwohl nur eine lokale Erwärmung entlang dem gewünschten Trennriss verfahrensstützend wirkt.

Durch eine Vorwärmung wird logischerweise der notwendige Energieeintrag durch den Laser geringer, um das Material bis in eine bestimmte Tiefe proportional zur Dicke zu erwärmen.

Bei dem in der US 5,609,284 angegebenen Verfahren scheint es trotz einer solchen Vorwärmung bei den geforderten hohen Geschwindigkeiten, die für die Einwirkungsdauer der Strahlung pro Flächenelement mit bestimmend sind und unter Beachtung von materialspezifischen Höchstwerten für die Strahlungsleistungsdichte (zur Vermeidung von Aufschmelzungen an der Oberfläche) und der als vorteilhaft angegebenen Strahlflecklänge, nicht möglich zu sein, die erforderliche Energie pro Flächenelement einzubringen, um die erforderlichen Zugspannungen zu erzeugen.

In der WO 2005/092806 wird der Eindruck erweckt, dass dieser erforderliche hohe Energieeintrag aufgrund der hohen Schneidgeschwindigkeit nur durch eine Erhöhung der Strahlungsleistung möglich ist, die allerdings nicht kontinuierlich einwirken kann, da sonst Aufschmelzungen auftreten könnten. Es wird daher vorgeschlagen, die Flächenelemente entlang einer Trennlinie statt einmalig über eine bestimmte Zeit kontinuierlich mit Laserstrahlung zu beaufschlagen, diese wiederholt, mit entsprechenden Pausen zu beaufschlagen. Dadurch wird der überhöhte Anstieg der Oberflächentemperatur durch mehr Zeit für die Wärmeleitung in das Materialinnere vermieden.

In den Ausführungsbeispielen werden hierfür Laserleistungen von 400 - 600 W, Scan-Geschwindigkeiten von 8-16 m/s, einem Strahlfleckdurchmesser von 3,7 - 4,7 mm und Scan-Längen von 160 - 500 mm angegeben.

Insbesondere bei einem permanent laufenden kontinuierlichen Prozess kommt es darauf an, die Prozesskosten möglichst gering zu halten. Bei dem in der WO 2005/092806 beschriebenen Verfahren wird jedoch im Vergleich zur US 5,609,284 ein Vielfaches an Laserleistung benötigt. Hinzu kommt der Energiebedarf für den Antrieb des Scanners.

Der Erfindung liegt die Aufgabe zu Grunde, ein Verfahren und eine Vorrichtung zu schaffen, mit denen mittels eines Lasers geringerer Leistung unmittelbar an einer Floatglasanlage der Rand des Floatglasbandes geschnitten werden kann. Dabei soll die Dicke des Floatglasbandes zwischen 0,4 und 24 mm verändert werden können.

Es ist auch Aufgabe der Erfindung, ein Verfahren und eine Vorrichtung zu schaffen, mit denen eine permanente kontinuierliche Prozessführung abgesichert wird.

Diese Aufgabe wird für ein Verfahren gemäß Anspruch 1 und für eine Vorrichtung gemäß Anspruch 8 gelöst.

Vorteilhafte Ausführungen des Verfahrens und der Vorrichtung sind in den Unteransprüchen beschrieben.

Die Erfindung geht von einem Verfahren nach US 5,609,284 aus und modifiziert dieses durch zwei verschiedene einander beeinflussende Maßnahmen, um mit einem Laser geringer Leistung Floatglasbänder schneiden zu können.

Es kommt der Lösung der Aufgabe entgegen, dass das Floatglasband während des Ritzens noch auf einer Temperatur zwischen ungefähr 50 und 80°C ist. Zum Unterschied gegenüber einem vorgewärmten Glas, ist Floatglas kernwarm, d.h. es hat ein Temperaturgefälle von innen nach außen und demnach an der Oberfläche Zugspannungen und im inneren Druckspannungen, was für den Prozess stützend wirkt.

Die zwei Maßnahmen um unabhängig von der jeweiligen Dicke den Bedarf an Strahlungsleistung zu minimieren, betreffen eine Leistungssteuerung in Abhängigkeit der Temperatur des Floatglasbandes unmittelbar vor Einwirkung des Lasers und einen zeitlich ausgedehnteren Wärmeentzug.

Zu diesem Zweck weist eine erfindungsgemäße Vorrichtung einen Temperatursensor auf, insbesondere einen IR-Sensor mit dem die Oberflächentemperatur am Schneidort gemessen wird sowie mehrere hintereinander angeordnete Kühldüsen, die es gegenüber Lösungen mit nur einer Kühldüse ermöglichen die Kühlung zeitlich auszudehnen.

Zur Absicherung der Prozessführung ist ein Rissdetektor vorgesehen, der permanent den Riss detektiert um im Falle des Abreißens des Risses, das Setzen eines neuen Initialrisses zu initiieren. Vorteilhaft detektiert der Rissdetektor nicht nur das Vorhandensein des Risses, sondern auch dessen Tiefe.

Ein Dickensensor erfasst die Dicke des Materials, um bei Dickenänderungen den Abstand der Ritzeinrichtung, der Kühldüsen und der Strahlformungsoptik zur Materialoberfläche hin konstant zu halten, wodurch insbesondere die Kühlbedingungen und die Strahlfleckgröße stabil bleiben.

Eine Besonderheit beim Randbeschneiden eines Floatglasbandes besteht darin, dass das Schneidverfahren wesentlich mitbestimmende Verfahrensparameter durch das Floatverfahren vorgegeben werden. So sind für den Schneidprozess neben der ohnehin vorgegebenen Glasdicke auch die Schneidgeschwindigkeit und die Temperatur des Materials gegeben.

Wie in der US 5,609,284 angegeben, ist es ist aus dem Stand der Technik bekannt, dass bei ansonsten konstanten Prozessparametern die Schneidgeschwindigkeit umgekehrt proportional zum Quadrat der Dicke des Materials ist. Interessanterweise ist das Abhängigkeitsverhältnis zwischen der Dicke des Materials und den hierzu üblichen Ziehgeschwindigkeiten beim Floatglasherstellen hinreichend ähnlich, wodurch sich überraschend ergibt,
dass bei einem ausreichend großen Prozessfenster eine sich ändernde Dicke des Materials in Verbindung mit der sich ändernden Zieh- und damit Schneidgeschwindigkeit nicht aktiv für die Prozesssteuerung beachtet werden braucht. Das ausreichend große Prozessfenster wird im Verhältnis zu den Ausführungsbeispielen in US 5,609,284 genannten Längen für den Strahlfleck durch eine ungefähre Verzehnfachung der Strahlflecklänge erreicht. Diese Strahlflecklänge kann für alle Dicken beibehalten werden. Das heißt, dass bei dem Schneidprozess lediglich die Laserleistung in Abhängigkeit von der Temperatur geregelt wird. Zur Steuerung des Prozesses bedarf es nicht der Kenntnis der Dicke des Materials sowie der Zieh- bzw. Schneidgeschwindigkeit.

Dass die Dicke vorteilhaft dennoch mit einem Sensor überwacht wird, dient ausschließlich der Nachführung der Kühldüsen und der Strahlformungsoptik, damit diese letztendlich einen stets gleichen Abstand zur Materialoberfläche haben.

Die Erfindung soll nachfolgend mittels einer Zeichnung anhand eines Ausführungsbeispiels näher erläutert werden. Hierzu zeigt:

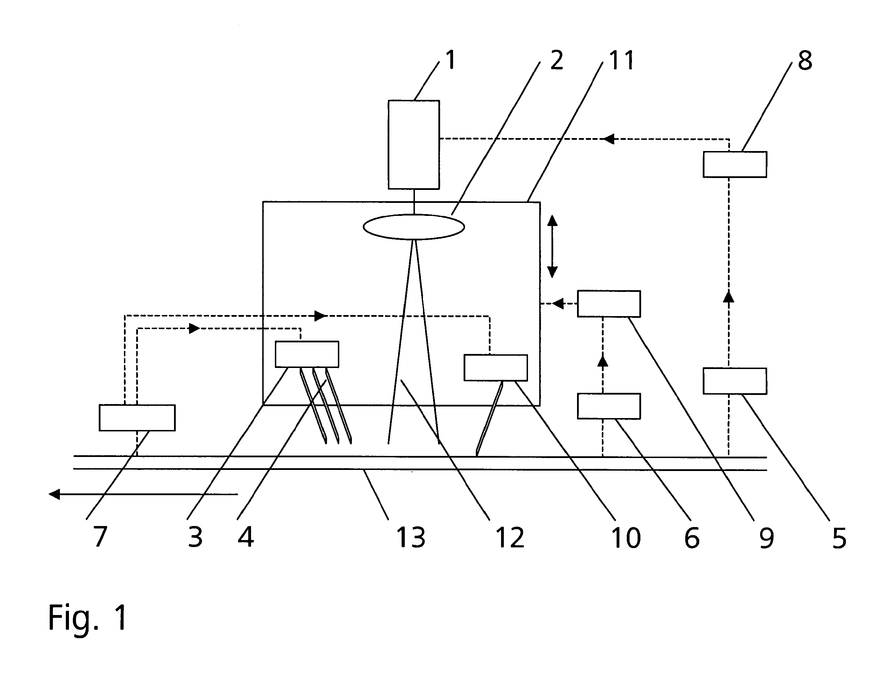

Fig. 1 eine Prinzipskizze einer erfindungsgemäßen Vorrichtung

Eine erfindungsgemäße Vorrichtung kann grundsätzlich an einer Brücke oder einem Ständer oberhalb der horizontalen Transporteinrichtung einer Floatglasanlage montiert werden. Um gleichzeitig beide Ränder eines Floatglasbandes 13 abzuschneiden werden, zwei Vorrichtungen benötigt, die gegebenenfalls einen gemeinsamen Temperatursensor 5 und einen gemeinsamen Dickensensor 6 haben können.

Grundsätzlich umfasst eine erfindungsgemäße Vorrichtung, wie in Fig. 1 gezeigt, einen Laser 1, eine dem Laser 1 nachgeordnete Strahlformungsoptik 2, die das emittierende Laserstrahlenbündel 12 in ein Strahlbündel mit einem elliptischen Querschnitt formt, eine Kühleinrichtung 3 mit mehreren hintereinander auf einer Geraden angeordneten Kühldüsen 4, einen berührungslos messenden Temperatursensor 5, z. B. einem IR-Sensor, einen berührungslos messenden Dickensensor 6, z. B. einem Ultraschallsensor, einen Rissdetektor 7, eine Steuereinrichtung 8 über die die Laserleistung in Abhängigkeit von der erfassten Temperatur gesteuert wird und eine Regeleinrichtung 9, die in Abhängigkeit der Dicke die Höhenposition einer Schneideinheit 11, welche die Strahlformungsoptik 2, die Kühleinrichtung 3 mit den Kühldüsen 4 und eine Ritzeinrichtung 10 umfasst, regelt.

Mit der bestimmungsgemäßen Befestigung der Vorrichtung an einer Brücke oder einem Ständer 11 oberhalb des Transportbandes, erhält die Schneideinheit 11, und damit insbesondere die Strahlformungsoptik 2, die Kühldüsen 4 und die Ritzeinrichtung 10 eine definierte Höhen- und Seitenposition zu der darunter horizontal angeordneten Transporteinrichtung. Die Ritzeinrichtung 10, die Strahlformungsoptik 2 und die Kühldüsen 4 sind in Transportrichtung der Transporteinrichtung, die gleich der Ziehrichtung des Floatglasbandes 13 ist, hintereinander mit gewählten Abständen zueinander angeordnet. Damit sie unabhängig von der Dicke des Floatglasbandes einen stets konstanten Abstand zu dem auf der Transporteinrichtung bewegten Floatglasbandes 13 haben, wird deren Höhenabstand über die Dickenänderung geregelt.
Die Kühldüsen 4, von denen im Ausführungsbeispiel drei vorhanden sind, können einzeln oder auch gleichzeitig geöffnet sein, womit das Kühlmittel lokal über eine kürzere oder längere Zeit einwirken kann und die Kühlung von der Oberfläche her mehr oder weniger tief in das Material erfolgt. Auch dadurch kann die Tiefe des Risses beeinflusst werden, was durch den noch warmen Materialkern begünstigt wird.

Um für den permanent und kontinuierlich laufenden Prozess sicher zustellen, dass auch tatsächlich immer ein Riss erzeugt wird, ist der Rissdetektor 7 vorhanden.

Als Rissdetektor 7 kann ein Strahlungssensor verwendet werden, der eine Messstrahlung aussendet, die an den Grenzflächen zum Riss in den Sensor zurückreflektiert wird. Wenn der Abstand und die Winkelstellung des Rissdetektors 7 zum Riss unabhängig von der Glasdicke konstant gehalten werden, ist es auch möglich über die Intensität bzw. Änderung der Intensität der in den Rissdetektor 7 zurückreflektierten Messstrahlung auf die Risstiefe bzw. Änderungen der Risstiefe zu schließen. Der Rissdetektor 7 könnte an der horizontal fest angeordneten Welle einer in der Höhe beweglichen losen Rolle befestigt sein, die auf der Oberfläche des Floatglasbandes 13 im Randbereich abrollt. Damit hält er einen stets konstanten Abstand zum Riss und richtet seine Messstrahlung auch stets unter dem gleichen Winkel auf die Grenzflächen des Risses.
Sobald kein Riss mehr detektiert wird, wird ein Signal an die Ritzeinrichtung 10 gegeben die unverzüglich einen neuen Initialriss setzt. Der Rissdetektor 7 kann auch ein Signal liefern, wenn die Risstiefe nicht ausreichend ist. Durch Zuschalten einer weiteren Kühldüse 4, wird der Riss tiefer getrieben.
Anstelle des optischen Rissdetektors 7 könnte auf den vorhandenen Riss auch geschlossen werden, wenn die Temperatur in Anschluss an die Kühlung noch einmal erfasst wird. Aus der Kenntnis der Erwärmungstemperatur, bestimmt durch die Oberflächentemperatur unmittelbar vor Einwirkung der Laserstrahlung, dem vorgegebenen Energieeintrag mittels Laser und der gemessenen Temperatur hinter der Kühlung, kann auf den erzeugten Temperaturgradient geschlossen werden und somit auf die aufgetretenen Zugspannungen, die sofern sie die Bruchspannungen überschritten haben, einen Riss erzeugt haben. Zu diesem Zweck wäre ein zweiter Temperatursensor hinter der letzten Kühldüse 4 angeordnet.

Das Schneidverfahren beginnt mit der Setzung eines Initialrisses auf der Oberfläche des Floatglasbandes 13, welches mit einer Schnittgeschwindigkeit gleich der Ziehgeschwindigkeit abhängig von der aktuellen Dicke des Floatglasbandes 13 relativ zur Vorrichtung in Schnittrichtung, gleich der Zugrichtung transportiert wird. In Schnittrichtung, beginnend mit dem Initialriss, wird vergleichbar mit einem Verfahren nach US 5,609,284 ein spezifischer Tiefenriss in das Floatglasband 13 getrieben, indem das Floatglasband 13 entlang des gewünschten Verlaufes des Risses zuerst mit einer Laserstrahlung eines elliptischen Strahlungsquerschnittes beaufschlagt und anschließend gekühlt wird. Entlang des so entstandenen Risses wird das Floatglasband 13 anschließend in bekannter Weise gebrochen.

Entgegen der Lehre der US 5,609,284 die Strahlgeometrie der Dicke entsprechend anzupassen, bleibt die Strahlfleckgeometrie, insbesondere die Strahlflecklänge unabhängig von der Dicke konstant. Praktisch hat sich für alle Standarddicken für das Floatglasband 13 eine Strahlflecklänge von 120 mm herausgestellt, was ca. dem zehnfachen der Strahlflecklängen entspricht, wie sie in den Ausführungsbeispielen der US 5,609,284 angegeben sind.

Die Laserleistung wird in dem erfindungsgemäßen Verfahren unabhängig von der Änderung der Dicke, die immerhin die Spanne einer Zehnerpotenz haben kann, nur in Abhängigkeit der Temperatur gesteuert. Die Schwankungsbreite der Temperatur des Floatglasbandes 13 unmittelbar vor Einwirkung des Lasers liegt zwischen ca. 50°C und 80°C. Die möglichen Temperaturunterschiede ergeben sich aus dem material- und dickenspezifischen Regime der aktiven Kühlung im Kühlofen und der passiven Kühlung durch die Hallentemperatur, die insbesondere über die Jahreszeiten deutlich schwanken kann.

Für eine Vorrichtung mit der das volle Spektrum der üblich Floatglasdicken bearbeitet werden soll, reicht ein Laser mit einer Laserleistung von 200 W aus. Für Floatglasanlagen, die nur für die Herstellung von Glas geringerer Dicke vorgesehen sind, z.B. nur bis 6 mm, würde bereits ein Laser mit einer maximalen Leistung von 100 W ausreichen.

Dem Fachmann auf dem Gebiet dieser Erfindung erschließt sich, dass die Erfindung nicht auf die Einzelheiten der vorstehend beispielhaft angeführten Ausführungsformen beschränkt ist, sondern dass die vorliegende Erfindung in anderen speziellen Formen verkörpert sein kann, ohne vom Umfang der Erfindung abzuweichen, die durch die anliegenden Ansprüche festgelegt ist.

### Bezugszeichenliste

- 1: Laser
- 2: Strahlformungsoptik
- 3: Kühleinrichtung
- 4: Kühldüse
- 5: Temperatursensor
- 6: Dickensensor
- 7: Rissdetektor
- 8: Steuereinrichtung
- 9: Regeleinrichtung
- 10: Ritzeinrichtung
- 11: Schneideinheit
- 12: Laserstrahlenbündel
- 13: Floatglasband

## Patentansprüche

1. Verfahren zum Trennen zweier Abschnitte eines Körpers aus Glas, indem von einem Initialriss ausgehend ein Tiefenriss mit einer für die Dicke des Körpers spezifischen Tiefe gebildet wird, der sich von der Oberfläche des Körpers in diesen hinein und in einer gewünschten Richtung entlang der Oberfläche erstreckt, wobei ein elliptisches Laserstrahlenbündel zur Oberfläche entlang der gewünschten Richtung mit einer Schneidgeschwindigkeit geführt wird und ein Kühlmittelstrom auf einen Bereich der durch das Strahlenbündel erhitzten Oberfläche um einen gewählten Abstand zum Strahlenbündel gerichtet wird
**dadurch gekennzeichnet,**
**dass** es sich bei dem Körper aus Glas um ein noch kernwarmes Floatglasband (13) handelt mit einer Oberflächentemperatur zwischen 50-80°C, welches zur Erzeugung spezifischer Glasdicken im Bereich von 0,4-24 mm mit jeweils spezifischen Ziehgeschwindigkeiten in einer Floatglasanlage gezogen wird, sodass die Schneidgeschwindigkeit gleich der Ziehgeschwindigkeit ist und die Ziehrichtung gleich der gewünschten Schnittrichtung ist,
**dass** die Oberflächentemperatur des Floatglasbandes (13) gemessen wird und die Ausbildung der spezifischen Tiefe des Risses ausschließlich über die Steuerung der Laserleistung in Abhängigkeit von der gemessenen Oberflächentemperatur erfolgt und
**dass** die Materialdicke gemessen und als Regelgröße verwendet wird, um die Strahlungs- und Kühlverhältnisse über Änderungen der Dicke konstant zu halten.

2. Verfahren nach Anspruch 1, **dadurch gekennzeichnet,**
**dass** der mit dem Kühlmittelstrom beaufschlagte Bereich in Schneidrichtung langgezogen ist, um einen Wärmeentzug in größere Tiefen zu bewirken.

3. Verfahren nach Anspruch 2, **dadurch gekennzeichnet,**
**dass** die Länge des vom Kühlmittel beaufschlagten Bereiches durch Zu- und Abschalten von hintereinander angeordneten Kühldüsen (4) variiert werden kann.

4. Verfahren nach Anspruch 1, **dadurch gekennzeichnet,**
**dass** die Rissbildung optisch detektiert wird, um bei einem eventuellen Rissabbruch einen neuen Initialriss zu setzen.

5. Verfahren nach Anspruch 4, **dadurch gekennzeichnet,**
**dass** mit der Rissdetektion auch die Risstiefe erfasst wird, um bei zu geringer Risstiefe den mit dem Kühlmittelstrom beaufschlagten Bereich zu verlängern.

6. Verfahren nach Anspruch 1, **dadurch gekennzeichnet,**
**dass** zur Erzeugung der Laserleistung ein Laser von 200 W verwendet wird.

7. Verfahren nach Anspruch 1, **dadurch gekennzeichnet,**
**dass** die Temperatur über den Riss hinter dem Kühlbereich erfasst wird, um aus dieser in Verbindung mit der Laserleistung und der gemessenen Temperatur unmittelbar vor Auftreffen der Laserstrahlung auf eine Rissentstehung schließen zu können.

8. Vorrichtung zur Erzeugung eines durch thermische Spannung induzierten spezifischen Tiefenrisses in ein relativ zur Vorrichtung in Schneidrichtung bewegtes Floatglasband (13) mit einem auf die Oberfläche des Floatglasbandes gerichteten Laser (1), einer Schneideinheit (11), welche eine dem Laser (1) nachgeordnete Strahlformungsoptik (2), eine Kühleinrichtung (3) und eine Ritzeinrichtung (10) umfasst sowie eine Steuereinrichtung (8) über die die Leistung des Lasers gesteuert wird, **dadurch gekennzeichnet,**
**dass** ein mit der Steuereinrichtung (8) verbundener Temperatursensor (5) vorhanden ist, der vor dem Ort des Auftreffens der Laserstrahlung auf das Floatglasband (13) dessen Oberflächentemperatur misst und diese als Steuergröße zur Steuereinrichtung (8) leitet,
**dass** die Kühleinrichtung (3) mehrere auf einer Geraden hintereinander angeordnete Kühldüsen (4) umfasst, die variabel geöffnet werden können, um die zeitliche Einwirkung des Kühlmittels verändern zu können,
**dass** ein Dickensensor (6) vorgesehen ist, der die Dicke des Floatglasbandes (13) erfasst und diese als Regelgröße einer Regeleinrichtung (9) zur Verfügung stellt, um einen stets konstanten Höhenabstand der Schneideinheit (11) zum Floatglasband (13) einzustellen und
**dass** eine Rissdetektor (7) vorhanden ist, der mit der Ritzeinrichtung (10) in Verbindung steht, um bei Rissabbruch einen neuen Initialritz auszulösen.

9. Vorrichtung nach Anspruch 8, **dadurch gekennzeichnet,**
**dass** der Rissdetektor (7) auch mit der Kühleinrichtung (3) verbunden ist, wodurch die einzelnen Kühldüsen (4) in Abhängigkeit von der erreichten Risstiefe geöffnet werden.
